(19) Europäisches Patentamt / European Patent Office / Office européen des brevets

(11) **EP 4 360 793 B1**

(12) **EUROPEAN PATENT SPECIFICATION**

(45) Date of publication and mention
of the grant of the patent:
**31.12.2025   Bulletin 2026/01**

(21) Application number: **22849131.2**

(22) Date of filing: **29.06.2022**

(51) International Patent Classification (IPC):
**B23K 9/04** *(2006.01)*      **B23K 9/032** *(2006.01)*
**B23K 9/127** *(2006.01)*      **B23K 31/00** *(2006.01)*
**B33Y 30/00** *(2015.01)*      **B33Y 50/02** *(2015.01)*
**B23K 9/095** *(2006.01)*      **B23K 9/23** *(2006.01)*
B23K 103/04 *(2006.01)*      B23K 103/10 *(2006.01)*

(52) Cooperative Patent Classification (CPC):
**B33Y 30/00; B23K 9/042; B23K 9/0953;**
**B23K 9/0956; B23K 9/1274; B23K 9/23;**
**B33Y 50/02;** B23K 2103/04; B23K 2103/10

(86) International application number:
**PCT/JP2022/025965**

(87) International publication number:
**WO 2023/008062 (02.02.2023 Gazette 2023/05)**

(54) **METHOD FOR CONTROLLING MODELING DEVICE, AND CORRESPONDING MODELING DEVICE**

VERFAHREN ZUR STEUERUNG EINER MODELLIERUNGSVORRICHTUNG, UND ENTSPRECHENDE MODELLIERUNGSVORRICHTUNG

PROCÉDÉ DE COMMANDE DE DISPOSITIF DE MODÉLISATION, ET DISPOSITIF DE MODÉLISATION CORRESPONDANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **28.07.2021   JP 2021123590**

(43) Date of publication of application:
**01.05.2024   Bulletin 2024/18**

(73) Proprietor: **KABUSHIKI KAISHA KOBE SEIKO SHO (KOBE STEEL, LTD.)**
**Hyogo 651-8585 (JP)**

(72) Inventors:
• **HUANG, Shuo**
**Kobe-shi, Hyogo 651-2271 (JP)**

• **YOSHIKAWA, Akinori**
**Kobe-shi, Hyogo 651-2271 (JP)**

(74) Representative: **Müller-Boré & Partner**
**Patentanwälte PartG mbB**
**Friedenheimer Brücke 21**
**80639 München (DE)**

(56) References cited:
JP-A- 2018 149 570      JP-A- 2019 098 353
JP-A- H0 724 573      JP-A- H0 724 573
JP-A- H06 198 445      JP-B1- 6 797 324
JP-B2- 2 641 469      JP-B2- 3 000 162
JP-B2- H0 440 116

## Description

The present invention relates to a method for controlling a modeling device, and a modeling device, see respectively claims 1 and 8.

BACKGROUND ART

There is known a technique of modeling a three-dimensional structure by laminating weld beads formed by melting and solidifying a filler metal (see Patent Literature 1). Patent Literature 1 discloses a technique in which, when a modeling object having a complicated three-dimensional free curved surface is manufactured while a welding torch is moved, droplets of a filler metal are prevented from flowing down from a weld surface due to a curved surface property thereof by making the weld surface directly below the welding torch substantially horizontal. Accordingly, Patent Literature 1 describes that the weld bead can be reliably formed on the weld surface even with a complicated three-dimensional free shape.

CITATION LIST

PATENT LITERATURE

Patent Literature 1: JP2007-275945A

JP 6 797324 B1 2 (describing the preamble of claims 1 and 8) relates to a lamination molding method capable of producing a lamination molded article by determining a target position of bead formation.

JP H07 24573 A relates to a method not required to add a particular mechanism even when the center of a column core is deviated from the center of rotation of a positioner.

SUMMARY OF INVENTION

TECHNICAL PROBLEM

As described above, when the additive modeling is performed on a complicated shape, a posture of the modeling object with respect to the welding torch is variously changed at the time of modeling. An error of a target position of a tip of the welding torch greatly affects a shape accuracy of the modeling. Therefore, when the additive modeling is performed using a welding robot, in a case in which the welding torch is tilted, the error may occur in the target position of the tip of the welding torch depending on an accuracy of the welding robot.

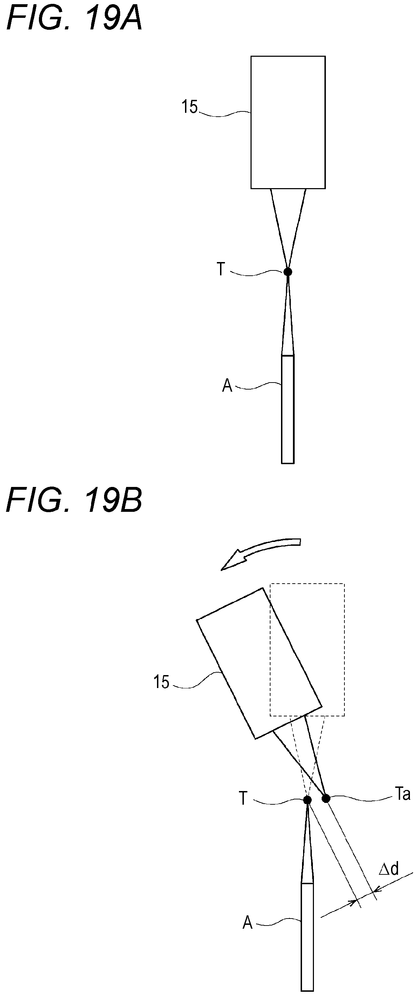

For example, in a state before driving illustrated in FIG. 19A, a target position T of a tip of a welding torch 15 coincides with a needle tip of a needle-shaped base metal A. When the welding robot tilts and rotates the welding torch 15 from this state, the welding torch 15 takes a tilted posture indicated by a solid line in FIG. 19B. A target position Ta of the tip of the tilted welding torch 15 deviates from the needle tip of the base metal A, and an error $\Delta d$ occurs in the target position. Such an error is a deviation due to a mechanical error of a rotation center of the welding torch 15 and occurs due to other reasons.

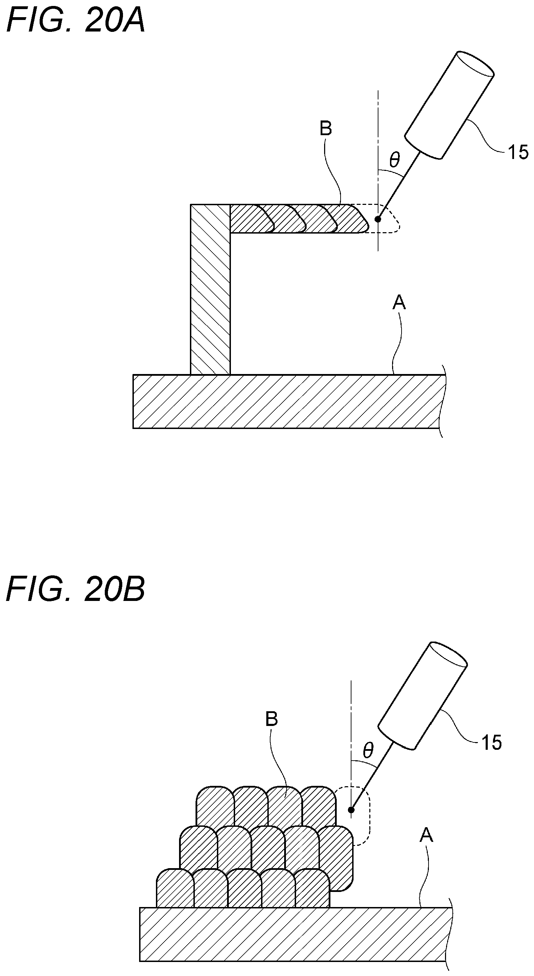

In a case of modeling a complicated shape of a protruding portion as illustrated in FIG. 20A or an overhang portion as illustrated in FIG. 20B, it is necessary to form a weld bead B while maintaining the target position with a high accuracy by tilting the welding torch 15 at an angle $\theta$ to an opposite side of the already modeled portion. However, when the welding torch 15 is tilted, a deviation may occur in the target position of the welding torch 15. Such a deviation of the target position of the welding torch 15 may make it difficult to perform highly accurate modeling as planned. In addition, an operator can also correct the target position of the welding torch by operating the welding robot, such visual correction is not preferable from the viewpoint of improving a work efficiency and an accuracy.

Therefore, an object of the present invention is to provide a method for controlling a modeling device, and a modeling device that can accurately correct a deviation in a target position without involving a complicated work.

SOLUTION TO PROBLEM

According to a first aspect of the present invention, a method for controlling a modeling device that corrects a target position of a welding torch in the modelling device is defined in claim 1.

Further preferred embodiments of the first aspect of the present invention are defined in the dependent claims 2-7.

According to a second aspect of the present invention, a modeling device for repeatedly forming weld beads on a base metal by melting and solidifying a filler metal supplied to a welding torch is defined in claim 8.

ADVANTAGEOUS EFFECTS OF INVENTION

According to the present invention, a deviation of the target position of the welding torch caused by the driving of the manipulator and the welding torch can be accurately corrected without involving a complicated work, and the accurate modeling can be performed.

BRIEF DESCRIPTION OF DRAWINGS

[FIG. 1] FIG. 1 is an overall configuration diagram of an additive modeling device for manufacturing a modeling object.
[FIG. 2] FIG. 2 is a functional block diagram of a control unit.
[FIG. 3] FIG. 3 is a schematic perspective view schematically illustrating a configuration of a welding torch and a shape measurement unit.
[FIG. 4] FIG. 4 is a diagram illustrating a relation between a sensor measurement visual field irradiated with a laser beam by the shape measurement unit and a target position of a welding torch.
[FIG. 5] FIG. 5 is a flowchart illustrating a procedure of a method for controlling an additive modeling device.
[FIG. 6A] FIG. 6A is a diagram illustrating a control step by the modeling device according to a first embodiment, and is a diagram illustrating a step showing a state before and after a posture of the welding torch is changed.
[FIG. 6B] FIG. 6B is a diagram illustrating a control step by the modeling device according to the first embodiment, and is a diagram illustrating a step showing a state before and after the posture of the welding torch is changed.
[FIG. 7] FIG. 7 is an enlarged diagram illustrating a region including feature points and target positions illustrated in FIG. 6B.
[FIG. 8] FIG. 8 is a diagram schematically illustrating a change in the target positions with the rotation of the welding torch.
[FIG. 9A] FIG. 9A is a diagram illustrating a step of approximating an actual profile to a geometric model and extracting a shape feature point of the model.
[FIG. 9B] FIG. 9B is a diagram illustrating a step of approximating the actual profile to a geometric model and extracting a shape feature point of the model.
[FIG. 10A] FIG. 10A is a diagram illustrating a control step by a modeling device according to an example not covered by the present invention, and is a diagram illustrating a step showing a state before and after a posture of a welding torch is changed.
[FIG. 10B] FIG. 10B is a diagram illustrating a control step by the modeling device according to the example not covered by the present invention, and is a diagram illustrating a step showing a state before and after the posture of the welding torch is changed.
[FIG. 11] FIG. 11 is an enlarged diagram illustrating a region including the feature points and the target positions illustrated in FIG. 10B.
[FIG. 12] FIG. 12 is a diagram illustrating a relation between the welding torch, and a base metal and a weld bead during lamination in a sensor measurement visual field.
[FIG. 13] FIG. 13 is a diagram illustrating a state in which a target position of the welding torch is corrected based on a relation between a vertex of the weld bead and a tip position of a filler metal.
[FIG. 14] FIG. 14 is a diagram schematically illustrating a difference in bead formation paths depending on whether the target position of the welding torch is corrected.
[FIG. 15A] FIG. 15A is a graph of a reference example illustrating a result of moving the welding torch without correcting the target position and detecting a height distribution of a corner, which is a feature point of the base metal, by a shape measurement unit.
[FIG. 15B] FIG. 15B is a graph of a reference example illustrating a result of moving the welding torch without correcting the target position and detecting a height distribution of the corner, which is the feature point of the base metal, by the shape measurement unit.
[FIG. 16A] FIG. 16A is a graph illustrating a result of moving the welding torch while correcting the target position and detecting a height distribution of the corner, which is the feature point of the base metal, by the shape measurement unit.
[FIG. 16B] FIG. 16B is a graph illustrating a result of moving the welding torch while correcting the target position and detecting a height distribution of the corner, which is the feature point of the base metal, by the shape measurement unit.
[FIG. 17] FIG. 17 is a graph illustrating changes in correction amounts of horizontal positions and heights at the positions $P_{t1}$ to $P_{t6}$ illustrated in FIG. 16.
[FIG. 18] FIG. 18 is a graph illustrating a result of measuring a cross-sectional shape orthogonal to a bead longitudinal direction at each of a bead start part position, a bead intermediate part position, and a bead end part position in a case in which the weld bead is formed along the corner of the base metal while correcting the target position.

[FIG. 19A] FIG. 19A is a diagram illustrating a relation between a welding torch in the related art and the base metal, and is a schematic diagram before the welding torch is driven.

[FIG. 19B] FIG. 19B is a diagram illustrating a relation between the welding torch in the related art and the base metal, and is a schematic diagram after the welding torch is driven.

[FIG. 20A] FIG. 20A is a diagram illustrating a state of the welding torch when a complicated shape in the related art is modeled, and is a schematic diagram illustrating a state when a protruding portion is modeled.

[FIG. 20B] FIG. 20B is a diagram illustrating a state of the welding torch when a complicated shape in the related art is modeled, and is a schematic diagram illustrating a state when an overhang portion is modeled.

DESCRIPTION OF EMBODIMENTS

Hereinafter, embodiments of the present invention will be described in detail with reference to the drawings.

(Configuration of Additive Modeling Device)

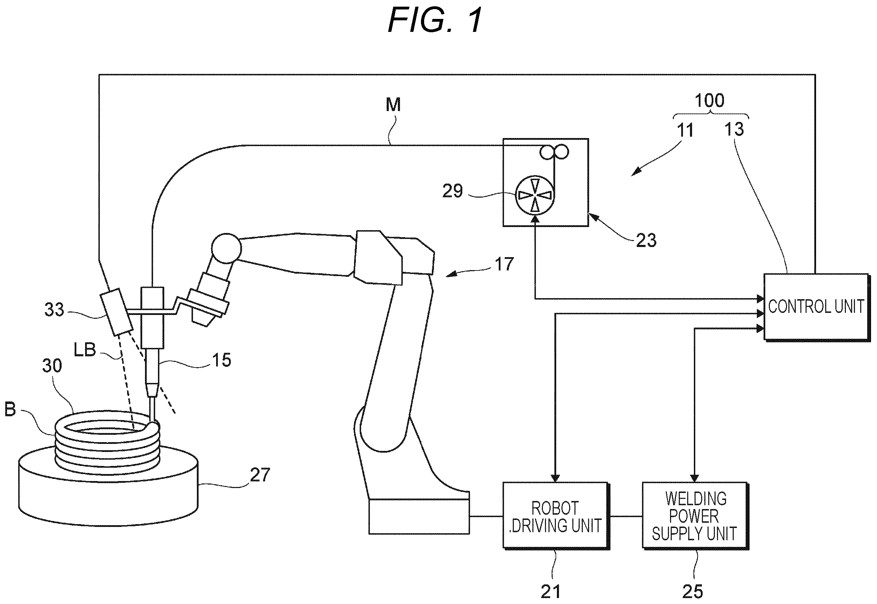

FIG. 1 is an overall configuration diagram of an additive modeling device for manufacturing a modeling object.

An additive modeling device (modeling device) 100 includes a modeling unit 11 and a control unit 13 that controls the modeling unit 11.

The modeling unit 11 includes a welding robot 17 having a welding torch 15 on a tip shaft thereof, a robot driving unit 21 that drives the welding robot 17, a filler metal supply unit 23 that supplies a filler metal (welding wire) M to the welding torch 15, a welding power supply unit 25 that supplies a welding current and a welding voltage, and a shape measurement unit 33 that measures a shape.

(Modeling Unit)

The welding robot 17 is an articulated robot, and the filler metal M is supported at a tip of the welding torch 15 attached to the tip shaft of a robot arm. A position and a posture of the welding torch 15 can be set three-dimensionally and freely within a range of a degree of freedom of the robot arm according to a command from the robot driving unit 21. Although not illustrated, a weaving mechanism for weaving the welding torch 15 may be provided at the tip shaft of the robot arm.

The welding torch 15 is a gas metal arc welding torch that has a shield nozzle (not illustrated) and is supplied with shield gas from the shield nozzle. An arc welding method may be a consumable electrode type such as coated arc welding or carbon dioxide arc welding, or a non-consumable electrode type such as TIG welding or plasma arc welding, and the method may be selected as appropriate depending on an additive modeling object to be manufactured.

For example, in the case of the consumable electrode type, a contact tip is disposed inside the shield nozzle, and the filler metal M to which a welding current is supplied is held by the contact tip. The welding torch 15 generates an arc from a tip of the filler metal M in a shield gas atmosphere while holding the filler metal M.

The filler metal supply unit 23 includes a reel 29 around which the filler metal M is wound. The filler metal M is fed from the filler metal supply unit 23 to a feeding mechanism attached to the robot arm or the like, and is fed to the welding torch 15 while being fed forward and backward by the feeding mechanism as necessary.

Any commercially available welding wire can be used as the filler metal M. For example, a welding wire specified by solid wires for MAG and MIG welding of mild steel, high tensile strength steel, and low temperature service steel (JIS Z 3312), flux-cored wires for arc welding of mild steel, high tensile strength steel, and low temperature service steel (JIS Z 3313), or the like can be used. Further, it is also possible to use the filler metal M such as aluminum, an aluminum alloy, nickel, or a nickel-based alloy according to required properties.

The robot driving unit 21 drives the welding robot 17 to move the welding torch 15. In addition to the movement of the welding torch 15, the filler metal M continuously supplied is melted by the welding current and the welding voltage from the welding power supply unit 25.

That is, the welding robot 17 is a manipulator in which the welding torch 15 for melting and solidifying the wire-shaped filler metal M while generating an arc is held at an arm tip. While the welding torch 15 is moved by the driving of the manipulator, the filler metal M continuously fed to the welding torch 15 is melted and solidified by the arc, and a weld bead B, which is a molten and solidified body of the filler metal M, is formed on a base plate 27, which is a base metal.

The shape measurement unit 33 is attached to the welding torch 15 or a manipulator closer to a root side than the welding torch 15, and can use a laser sensor that emits a laser beam and acquires a profile (information representing an outer shape) of an object irradiated with the laser beam. The shape measurement unit 33 has a function of measuring the profile of the object, but may measure the profile of the object by a method other than laser, and is not limited to the laser sensor.

(Control Unit)

Although not illustrated, the control unit 13 is a computer device including an input and output unit, a storage unit, and a calculation unit.

The welding robot 17, the welding power supply unit 25, the filler metal supply unit 23, and the like are connected to the input and output unit. The storage unit stores various types of information including a driving program to be described later. The storage unit includes a memory such as a ROM and a RAM, a drive device such as a hard disk and a solid state drive (SSD), and a storage medium such as a CD, a DVD, and various memory cards, and can input and output various types of information. A modeling program corresponding to a modeling object to be manufactured is input to the control unit 13 via a communication line such as a network or various storage media. The modeling program is created based on an additive plan in which a bead forming trajectory for forming the weld bead B and welding conditions are defined, and includes a large number of instruction codes.

The control unit 13 executes a modeling program stored in the storage unit, drives the welding robot 17, the filler metal supply unit 23, the welding power supply unit 25, and the like, and forms the weld bead B according to the modeling program. That is, the control unit 13 causes the robot driving unit 21 to drive the welding robot 17 to move the welding torch 15 along a trajectory (welding trajectory) of the welding torch 15 set in the modeling program, and drives the filler metal supply unit 23 and the welding power supply unit 25 according to the set welding conditions to melt and solidify the filler metal M at the tip of the welding torch 15 by the arc. As described above, a modeling object 30 having a desired three-dimensional shape is modeled by sequentially laminating the weld beads B based on the modeling program.

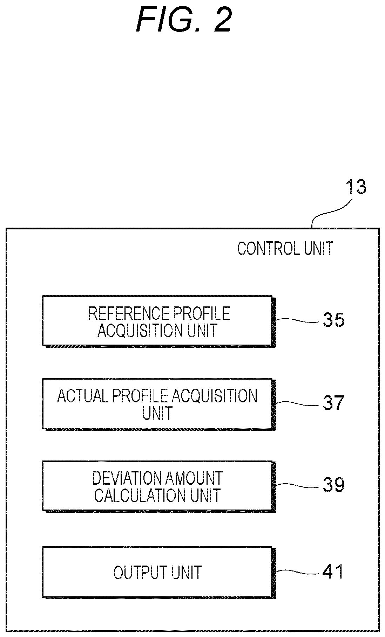

FIG. 2 is a functional block diagram of the control unit 13.

The control unit 13 includes a reference profile acquisition unit 35, an actual profile acquisition unit 37, a deviation amount calculation unit 39, and an output unit 41, which will be described later in detail.

(Welding Torch and Shape Measurement Unit)

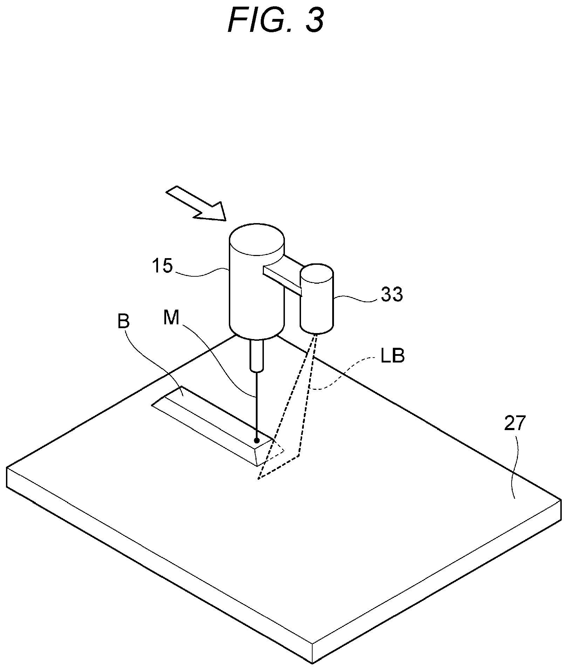

FIG. 3 is a schematic perspective view schematically illustrating configurations of the welding torch 15 and the shape measurement unit 33.

The welding torch 15 is moved in an arrow direction by the welding robot 17. In addition, the shape measurement unit 33 measures information including a profile (outer shape) of a target object such as the base plate (base metal) 27 serving as a foundation of the weld bead B formed by emitting a laser beam LB. Although not illustrated, when the already formed weld bead B is present in an illumination region of the laser beam LB, the profile of the weld bead B is also measured.

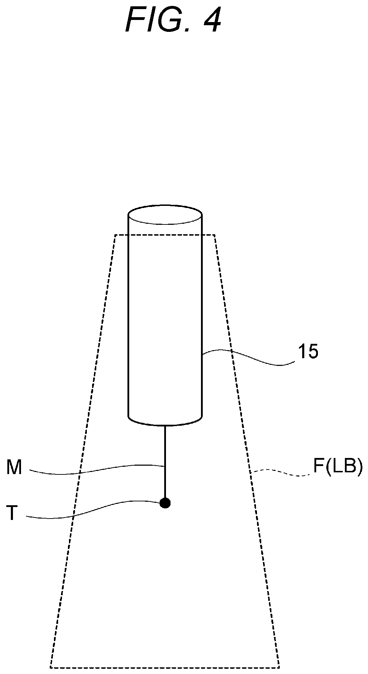

FIG. 4 is a diagram illustrating a relation between a sensor measurement visual field F irradiated with the laser beam LB by the shape measurement unit 33 and a target position T of a welding torch.

An illumination range of the laser beam LB emitted from the shape measurement unit 33 is the sensor measurement visual field F for measuring the profile of the target object. The target position T of the welding torch 15 is assumed to be a tip position of the filler metal M protruding from the welding torch 15 for simplification of description. The shape measurement unit 33 finds the target position T in the sensor measurement visual field F such that the tip of the filler metal M coincides with the target position T of the target object, and the robot driving unit 21 drives the welding torch 15 such that the tip of the filler metal M coincides with the target position T.

(Overview of Method for Controlling Additive Modeling Device)

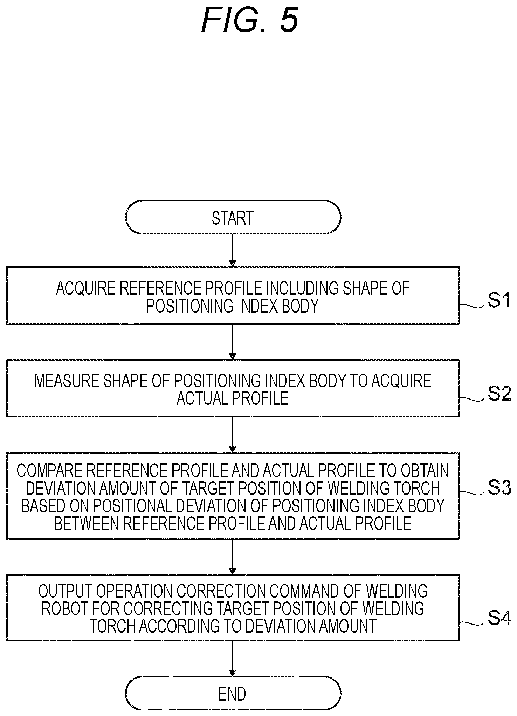

FIG. 5 is a flowchart illustrating a procedure of a method for controlling the additive modeling device 100.

The additive modeling device 100 repeatedly forms the weld beads B on the base metal by melting and solidifying the filler metal M supplied to the welding torch 15 using the welding robot (manipulator) 17 in which the welding torch 15 is held. The control unit 13 controls the additive modeling device 100 in accordance with the flowchart illustrated in FIG. 5 so as to correct the target position of the welding torch 15 to a correct position by using a positioning index body implemented by at least a part of the base metal or the weld bead B.

A schematic control operation performed by the control unit 13 includes the following steps S1 to S4.

The reference profile acquisition unit 35 illustrated in FIG. 2 acquires a reference profile that is prepared in advance and that includes a shape of the above-described positioning index body (S1).

The actual profile acquisition unit 37 measures a shape of a positioning index body by the shape measurement unit 33 attached to the welding torch 15 or the manipulator to acquire an actual profile (S2).

Then, the deviation amount calculation unit 39 compares the reference profile with the actual profile of the positioning index body to obtain a deviation amount of the target position of the welding torch 15 based on a positional deviation of the positioning index body between the reference profile and the actual profile (S3).

Thereafter, the output unit 41 outputs an operation correction command of the welding robot 17 for correcting the target position of the welding torch 15 according to the deviation amount (S4).

The reference profile acquisition unit 35, the actual profile acquisition unit 37, the deviation amount calculation unit 39, and the output unit 41 implement functions corresponding to S1 to S4, respectively. These functions are implemented by the control unit 13, which is a computer device, operating according to the program stored in the storage unit of the control unit 13. The storage unit that stores the program may be provided in the additive modeling device 100 or may be stored in an external server or the like separate from the additive modeling device 100.

The control unit 13 compares the reference profile prepared in advance with the actual profile obtained by measurement with the shape measurement unit 33 in each of steps S1 to S4 to obtain the deviation amount of the target position of the welding torch 15, and generates a signal for correcting the target position of the welding torch 15. Accordingly, the deviation of the target position of the welding torch 15 caused by the driving of the welding robot 17 and the welding torch 15 is corrected, thereby performing accurate modeling.

Hereinafter, a first embodiment and a second embodiment, which are examples of the method for controlling a modeling device, will be described.

In the first embodiment, the reference profile and the actual profile described above are generated using data measured by the shape measurement unit 33 before and after the welding robot 17 is driven. On the other hand, in the second embodiment, the reference profile is generated using information representing a design shape of the positioning index body. As described above, the embodiments are different in a method for generating a reference profile.

(First Embodiment)

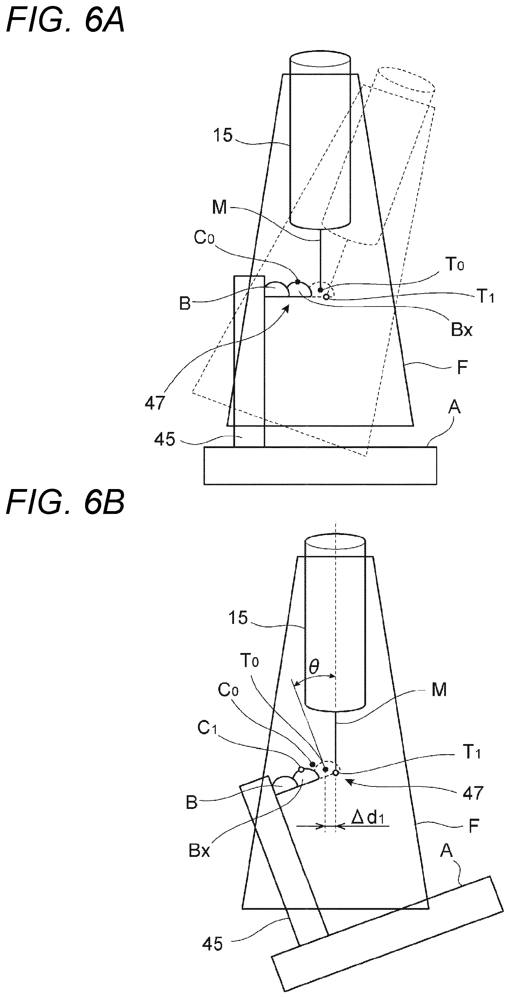

FIGS. 6A and 6B are diagrams illustrating a control step by the modeling device according to the first embodiment, and are diagrams illustrating a step showing a state before and after the posture of the welding torch 15 is changed. In the following description, the base plate 27 is also referred to as a base metal A.

FIG. 6A illustrates a state before the weld bead B is formed at the target position and a state before the posture of the welding torch 15 is tilted by the driving of the welding robot 17 illustrated in FIG. 1. The welding torch 15 stands in a vertical direction with respect to the base metal A as indicated by a solid line. The position of the welding torch 15 in this state is set as a reference position.

As illustrated in FIG. 6A, when a protruding portion 47 that protrudes laterally from a columnar portion 45 is formed by the weld bead B, it is preferable to tilt the welding torch 15 as indicated by a broken line rather than a case of maintaining the welding torch 15 standing in the vertical direction as indicated by the solid line from the viewpoint of smooth modeling.

FIG. 6B is a diagram illustrating a state after the welding torch 15 is rotationally moved by the driving of the welding robot 17 after coordinate conversion such that the welding torch 15 faces in the vertical direction in the drawing. An actual welding torch 15 is tilted at an angle $\theta$ from the vertical direction as illustrated in FIG. 6A, and the welding torch 15 is displayed as a reference so that a correction processing can be easily understood. In the state in which the welding torch 15 is tilted from the vertical direction as described above, a position (indicated by a dotted line) of a next weld bead to be formed following a weld bead Bx is set as a target position.

However, due to a mechanical error of a rotation center when the welding torch 15 is rotated by the driving of the welding robot 17 and a positional deviation that may occur due to other reasons, the welding torch 15 may deviate from the target position at which the original weld bead B is formed after the rotation. That is, a target position $T_0$ determined before the rotation of the welding torch 15 illustrated in FIG. 6A deviates to a target position $T_1$ after the rotation of the welding torch 15 indicated by the broken line. Therefore, as illustrated in FIG. 6B, the target position $T_1$ deviates from a central axis of the welding torch 15 by $\Delta d_1$ with respect to the original target position $T_0$. It is often difficult to determine the cause of such deviation, and it is difficult to directly derive the deviation amount.

In order to cope with the above-described event, in the method for controlling a modeling device, the target position is corrected by using the positioning index body implemented by at least a part of the base metal A or the weld bead B. The positioning index body is obtained by extracting, as a characteristic, at least a part of a shape of at least one or both of the base metal A and the weld bead B present in the sensor measurement visual field F of the shape measurement unit 33 before and after the rotation of the welding torch 15. Here, any weld bead $B_X$ measured by the shape measurement unit 33 in the state of FIG. 6A is used as the positioning index body. The positioning index body may be one or a plurality of weld beads B, or may be only a part of a top portion or the like of the weld bead B. in addition, the positioning index body may be the base metal A or may be a part of the shape of a corner or the like of the base metal A.

The reference profile acquisition unit 35 of the control unit 13 acquires the reference profile including the shape of the positioning index body in the state of FIG. 6A. The reference profile is information including position information of a feature point of the positioning index body measured by the shape measurement unit 33 before the rotation of the welding torch 15 by driving the welding robot 17. That is, the reference profile includes not only information related to the shape of the positioning index body but also the position information of the feature point (coordinates) extracted from the positioning index body. As illustrated in FIG. 6A, a vertex $C_0$ (highest position of an upper surface of a curved bead) at a maximum height position of the weld bead $B_X$ is used as a feature point. The feature point may be any point that characterizes the shape of the positioning index body, and may be, for example, not only the vertex $C_0$ of the weld bead $B_X$ but also other parts such as a vertex of the corner of the base metal A.

As described above, the positioning index body and the reference profile are prepared before the rotation of the welding torch 15. The reference profile shown here is information on a shape of the weld bead $B_X$, but is not limited thereto, and for example, may be a shape of the plurality of weld beads B or the shape of the base metal A.

Next, the actual profile acquisition unit 37 of the control unit 13 drives the shape measurement unit 33 to measure the weld bead $B_X$ present in the sensor measurement visual field F as illustrated in FIG. 6B. The actual profile acquisition unit 37 acquires an actual profile of the weld bead $B_X$, which is a positioning index body. The actual profile is a profile measured by the shape measurement unit 33 after the welding torch 15 is rotated by the driving of the welding robot 17, and is information including a position of a feature point of the positioning index body. That is, the profile of the weld bead $B_X$, which is the positioning index body, includes a vertex $C_1$, and the control unit 13 refers to the actual profile to acquire the vertex $C_1$ as a feature point. Before and after the rotation of the welding torch 15, a positional relation between the vertex $C_0$ and the vertex $C_1$ coincides with the vertex $C_0$ when the vertex $C_1$ is rotated clockwise in FIG. 6B by a rotation angle of the welding torch 15 with a torch tip position as a rotation axis.

However, as described above, before and after the rotation of the welding torch 15, a target position of the shape measurement unit 33 may deviate. When the deviation occurs, a position of the vertex $C_0$ and a position of the vertex $C_1$ as the feature points deviate before and after the rotation of the welding torch 15.

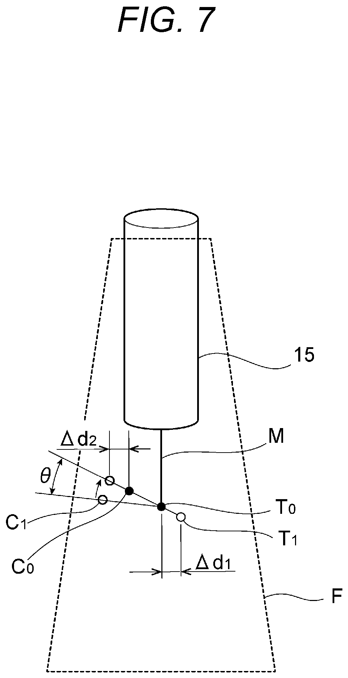

FIG. 7 is an enlarged diagram illustrating a region including the feature points and the target positions illustrated in FIG. 6B.

The deviation amount of the target positions of the welding torch 15 before and after the rotation of the welding torch 15 is the deviation amount $\Delta d_1$ between the target position $T_0$ and the target position $T_1$. On the other hand, the deviation amount between the two feature points before and after the rotation of the welding torch 15 is a deviation amount $\Delta d_2$ between the vertex $C_0$ and a point obtained by rotating the vertex $C_1$ clockwise in FIG. 7 by the rotation angle of the welding torch 15. Unless a special event such as deformation of the base metal A or the weld bead B occurs, $\Delta d_1$ and $\Delta d_2$ are necessarily equal ($\Delta d_1 = \Delta d_2$).

The target position $T_1$ after the rotation of the welding torch 15 deviates from the target position $T_0$ before the rotation of the welding torch 15. Therefore, the target position $T_1$ of the welding torch 15 after the rotation may be corrected by the generated deviation amount $\Delta d_1$, but it is difficult to grasp in advance and it is difficult to predict the deviation between the target position $T_0$ and the target position $T_1$ like the mechanical error.

On the other hand, the deviation amount $\Delta d_2$ between the two feature points before and after the rotation can be easily detected as a simple deviation in coordinates. Therefore, the control unit 13 compares the reference profile with the actual profile of the positioning index body to obtain the positional deviation of the positioning index body between the reference profile and the actual profile. Accordingly, the deviation amount $\Delta d_1$ of the target positions of the welding torch 15, which is difficult to be directly obtained, is obtained based on the deviation amount between the feature points. That is, the control unit 13 compares position information of the vertex $C_0$, which is the feature point in the reference profile, with position information of the vertex $C_1$, which is the feature point in the actual profile to derive the deviation amount $\Delta d_2$ of the weld bead $B_X$, which is the positioning index body. The deviation amount $\Delta d_2$ is equal to the deviation amount $\Delta d_1$ between the target position $T_0$ and the target position $T_1$, and thus the control unit 13 can indirectly obtain the deviation amount $\Delta d_1$ based on the deviation amount $\Delta d_2$.

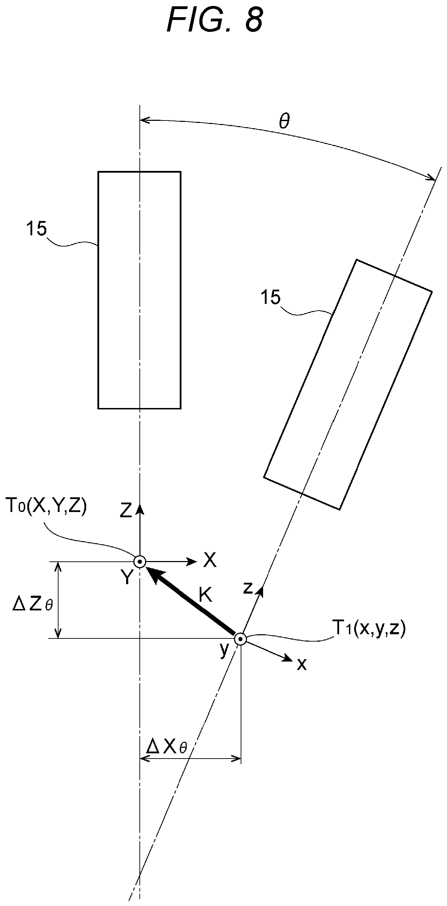

FIG. 8 is a diagram schematically illustrating a change in the target positions with the rotation of the welding torch 15.

It is assumed that the target position of a torch tip of the welding torch 15 is moved from the position $T_0$ to the position $T_1$ by the rotation of the angle $\theta$. A coordinate system of the welding torch 15 before the rotation is (X, Y, X), and a coordinate system of the welding torch 15 after the rotation is (x, y, z). Here, in order to simplify the description, the rotation of the angle $\theta$ is rotation in a Z-X plane, but actually, the deviation of the target positions due to the rotation of the welding torch 15 may occur in any direction.

The control unit 13 calculates a correction vector K ($\Delta x_\theta$, $\Delta y_\theta$, $\Delta z_\theta$) representing a deviation amount of a target position by using the following calculation expressions (1) to (3).

[Formula 1]

$$\begin{pmatrix} x \\ y \\ z \end{pmatrix} = \begin{pmatrix} \Delta x_\theta \\ \Delta y_\theta \\ \Delta z_\theta \end{pmatrix} + \begin{pmatrix} \cos(-\theta) & 0 & -\sin(-\theta) \\ 0 & 1 & 0 \\ \sin(-\theta) & 0 & \cos(-\theta) \end{pmatrix} \cdot \begin{pmatrix} X \\ Y \\ Z \end{pmatrix} \quad \cdots (1)$$

$$\begin{pmatrix} \Delta x_\theta \\ \Delta y_\theta \\ \Delta z_\theta \end{pmatrix} = \begin{pmatrix} x \\ y \\ z \end{pmatrix} - \begin{pmatrix} \cos\theta & 0 & \sin\theta \\ 0 & 1 & 0 \\ -\sin\theta & 0 & \cos\theta \end{pmatrix} \cdot \begin{pmatrix} X \\ Y \\ Z \end{pmatrix} \quad \cdots (2)$$

$$\begin{pmatrix} \Delta x_\theta \\ \Delta y_\theta \\ \Delta z_\theta \end{pmatrix} = \begin{pmatrix} c_{x1} \\ c_{y1} \\ c_{z1} \end{pmatrix} - \begin{pmatrix} \cos\theta & 0 & \sin\theta \\ 0 & 1 & 0 \\ -\sin\theta & 0 & \cos\theta \end{pmatrix} \cdot \begin{pmatrix} c_{x0} \\ c_{y0} \\ c_{z0} \end{pmatrix} \quad \cdots (3)$$

In the above,

$T_0$ (X, Y, Z) is a target position before the rotation of the welding torch,
$T_1$ (x, y, z) is a target position after the rotation of the welding torch,
$\Delta x_\theta$, $\Delta y_\theta$, and $\Delta z_\theta$ are deviation amounts in an x direction, a y direction, and a z direction due to the rotation (angle $\theta$) of the welding torch,
($c_{x0}$, $c_{y0}$, $c_{z0}$) are coordinates of a feature point $c_0$ in the same coordinate system (X, Y, Z) as the target position $T_0$, and ($c_{x1}$, $c_{y1}$, $c_{z1}$) represent coordinates of a feature point $c_1$ in the same coordinate system (x, y, z) as the target position $T_1$.

The control unit 13 drives the welding robot 17 to return the target position $T_1$ of the welding torch 15 after the rotation to the correct target position $T_0$ by using the obtained correction vector K ($\Delta x_\theta$, $\Delta y_\theta$, $\Delta z_\theta$). Thus, the target position of the welding torch 15 after the rotation can be corrected to a correct target position.
Specifically, the output unit 41 of the control unit 13 outputs the operation correction command of the welding robot 17 for correcting the target position of the welding torch 15 after the rotation to the robot driving unit 21 illustrated in FIG. 1 using the correction vector K ($\Delta x_\theta$, $\Delta y_\theta$, $\Delta z_\theta$) obtained as described above.
The robot driving unit 21 drives the welding robot 17 based on the input operation correction command to correct the target position of the welding torch 15 from the target position $T_1$ to the target position $T_0$ by the deviation amount. The correction may be performed by driving the welding robot 17 immediately after the welding torch 15 is rotationally driven, or may be performed during a next operation of the welding torch 15 after the welding torch 15 is rotationally driven. In addition, coordinates or a movement vector of a movement destination when the welding torch 15 is moved next time may be corrected.
Accordingly, the welding torch 15 can supply the filler metal M toward the correct target position to form an accurate weld bead, thereby enabling highly accurate additive modeling. In this case, it is not necessary to re-teach a positional relation between the target position and the base metal A or the weld bead B. In addition, when the obtained deviation amount is equal to or less than a predetermined threshold value, it is not always necessary to perform the correction, and the correction may be performed only when the deviation amount exceeds the threshold value.
According to the present embodiment, the deviation of the target position due to the rotational movement of the welding torch 15 caused by the driving of the welding robot 17 can be corrected, thereby enabling accurate additive modeling. In particular, the modeling with such correction can be suitably applied to the modeling of an overhang shape or the like that requires precise adjustment of the target position. In addition, the feature points represent the information of the reference profile and the actual profile, and it is expected to improve robustness in the deviation correction.
In addition, the control unit 13 may determine the correction vector K of the target position of the welding torch 15 based on a deviation amount obtained by defining a plurality of types of feature points in the reference profile and the actual profile and averaging a positional deviation between the feature points for each type of feature point. Accordingly, it is possible to obtain the correction vector K by averaging change amounts of the plurality of feature points, and it is expected to improve the robustness in the deviation correction.

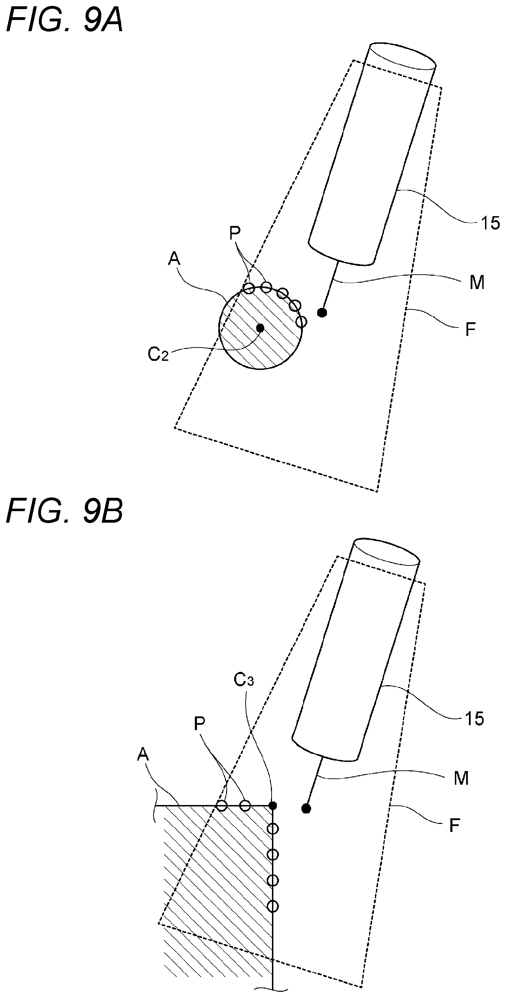

FIGS. 9A and 9B are diagrams illustrating a step of approximating the actual profile to a geometric model and extracting a shape feature point of the model.

FIG. 9A illustrates an example in which a central point of the base metal A or the weld bead B having a circular outer shape is extracted as a shape feature point, and FIG. 9B illustrates an example in which a vertex of a corner of the base metal A or the weld bead B having a corner is extracted as a shape feature point.

FIG. 9A illustrates an example in which the weld bead B is formed on a surface of the base metal A of a round bar having a circular cross section. The shape measurement unit 33 extracts a plurality of points P arranged along a surface of the round bar, and the control unit 13 calculates a circular central point $C_2$ of the base metal A from the plurality of points P, and sets the central point $C_2$ as a shape feature point of a circular model. The shape feature point is not limited to the central point, and may be any point that can be uniquely derived from a geometric shape in a cross section orthogonal to a longitudinal direction of the base metal A or the weld bead B.

FIG. 9B illustrates an example in which the weld bead B is formed on the surface of the base metal A such as a plate material having a corner. The shape measurement unit 33 extracts the plurality of points P arranged along two intersecting linear sides, and the control unit 13 calculates a vertex $C_3$ of the corner of the base metal A from the plurality of points P, and sets the vertex $C_3$ of the corner as a shape feature point. Accordingly, even when the measured profile of the target object is disturbed or varied, a position can be easily specified as long as the position is the vertex of the corner, and the shape feature point can be easily and appropriately set.

As described above, the control unit 13 can also set, as the above-described feature point, a shape feature point of any geometric model obtained by approximating all or a part of the actual profile measured by the shape measurement unit 33 to the model. In this case, an influence of a measurement error of the measured actual profile directly on the position of the feature point can be reduced, and a measurement accuracy is improved.

When the shape measurement unit 33 is the laser sensor, a linear profile obtained by continuously measuring a shape of a target object can be obtained, and thus a sequence of points illustrated in FIGS. 9A and 9B can be measured at a time, thereby enabling a high-speed and accurate shape measurement.

A feature point may be set in any one of a plurality of valley portions formed between the weld beads B arranged in a plurality of rows. A cross-sectional shape of the weld bead B orthogonal to a bead longitudinal direction may have an undefined curvature, such as a shape close to a trapezoid or an ellipse depending on the welding conditions. In this case, by setting the valley portion between the weld beads B as the feature point, the feature point can also be easily searched for and set regardless of a bead cross-sectional shape, and a calculation processing can be simplified.

(Example not covered by the present invention)

In the first embodiment, the reference profile and the actual profile are acquired by measurement with the shape measurement unit 33 before and after the rotation of the welding torch 15 by driving the welding robot 17. In an example not covered by the present invention, and to be described below, a reference profile is acquired based on design information including a design shape of a positioning index body without being measured by the shape measurement unit 33.

The design information used here is information such as shape data (CAD data or the like) representing a three-dimensional shape of a modeling object to be manufactured and a shape of a base metal, and a trajectory plan representing a formation path, a formation position, a bead shape, and the like of a weld bead formed therefrom, and is information prepared in advance before modeling. When welding conditions including a moving speed of the welding torch 15, a feeding speed of the filler metal M, a welding voltage, a welding current, and the like are determined, the bead shape and the like can be generally predicted, and can be prepared as the design information in advance before modeling. Accordingly, it is possible to perform correction corresponding to an unintended error factor such as an arrangement error and tilting of the base metal, and dripping of the weld bead during bead formation.

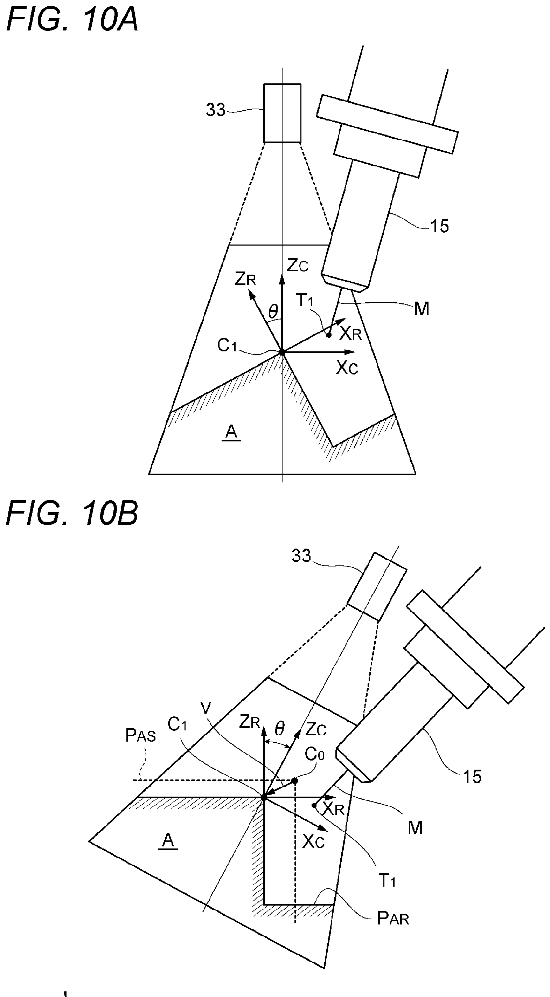

FIGS. 10A and 10B are diagrams illustrating a control step by a modeling device according to the example not covered by the present invention and are diagrams illustrating a step showing a state before and after the posture of the welding torch 15 is changed.

FIG. 10A illustrates a state in which the target position $T_1$ at which the welding torch 15 supplies the filler metal M is determined in the sensor measurement visual field F by the shape measurement unit 33 illustrated in FIG. 3. FIG. 10B is a diagram illustrating the state in FIG. 10A being rotated by the angle $\theta$ in the drawing with reference to a horizontal direction and a vertical direction of the base metal A.

Here, a sensor coordinate system of the shape measurement unit 33 is represented by $(X_C, Y_C, Z_C)$, and a base metal coordinate system of the base metal A is represented by $(X_R, Y_R, Z_R)$. FIGS. 10A and 10B illustrate a state in which a $Y_C$ axis and a $Y_R$ axis coincide with each other.

EP 4 360 793 B1

Specifically, FIG. 10A illustrates the sensor coordinate system ($X_C$, $Y_C$, $Z_C$), which is detection coordinates irradiated with a laser beam by the shape measurement unit 33, as a reference. FIG. 10B illustrates the base metal coordinate system ($X_R$, $Y_R$, $Z_R$) that determines a three-dimensional direction of the base metal A as a reference. A corner of the base metal A is formed at a portion in which a side along an $X_R$ direction and a side along a $Z_R$ direction of the base metal coordinate system ($X_R$, $Y_R$, $Z_R$) intersect to each other.

FIGS. 10A and 10B illustrate a state before the weld bead is formed, and in FIG. 10A, the shape measurement unit 33 detects the corner of the base metal A included in the sensor measurement visual field F. That is, the actual profile acquisition unit 37 of the control unit 13 illustrated in FIG. 2 causes the shape measurement unit 33 to measure a part of a shape of the base metal A, which is the positioning index body, after the welding torch 15 is rotated by driving the welding robot. Then, information on an actual profile $P_{AR}$ included in the sensor measurement visual field F is acquired. Here, a feature point included in the actual profile $P_{AR}$ is the vertex $C_1$ of the corner of the base metal A.

FIG. 10B indicates a reference profile $P_{AS}$ extracted from the design information of the base metal A by a broken line. The reference profile $P_{AS}$ also includes the vertex $C_0$ of the corner of the base metal A. The reference profile $P_{AS}$ is acquired by the reference profile acquisition unit 35 illustrated in FIG. 2 based on the design information including the design shape of the base metal A, which is the positioning index body.

In the present embodiment, the actual profile $P_{AR}$ deviates with respect to the reference profile $P_{AS}$ due to a position error or the like caused by the rotation of the welding torch 15. A positional deviation amount is represented by a correction vector V from the vertex $C_0$ of the reference profile $P_{AS}$ toward the vertex $C_1$ of the actual profile $P_{AR}$. The correction vector V represents a magnitude and a direction of the generated positional deviation.

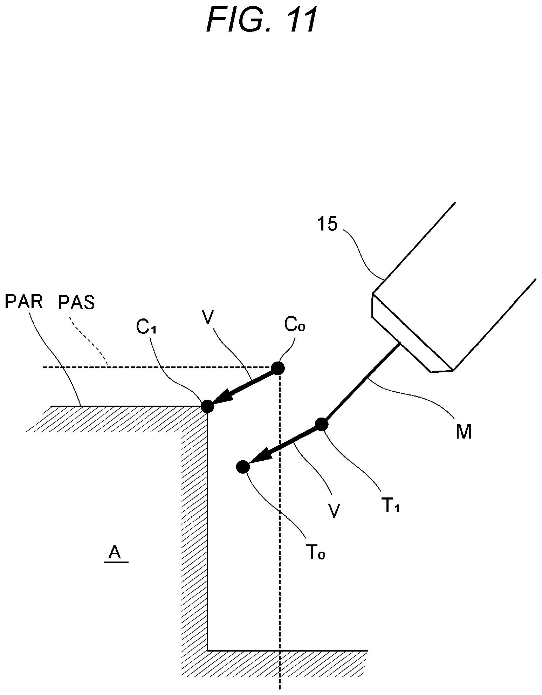

FIG. 11 is an enlarged diagram illustrating a region including the feature points and the target positions illustrated in FIG. 10B.

The correction vector V corresponds to a positional deviation between a feature point (vertex $C_0$) of the reference profile $P_{AS}$ indicated by the broken line and a feature point (vertex $C_1$) of the actual profile $P_{AR}$ indicated by a solid line. The deviation amount calculation unit 39 illustrated in FIG. 2 obtains the correction vector V and sends information on the obtained correction vector V to the output unit 41. The output unit 41 outputs a signal for correcting the target position of the welding torch 15 using the input information on the correction vector V.

That is, the control unit 13 obtains the correction vector V representing a direction and a length from a positioning index body in the actual profile $P_{AR}$, here the vertex $C_1$, which is a position of the feature point of the base metal A, to a positioning index body in the reference profile $P_{AS}$, here, the vertex $C_0$, which is a position of the feature point of the base metal A. Then, the control unit 13 outputs an operation correction command for correcting the target position of the welding torch 15 in the actual profile $P_{AR}$ according to the correction vector V. The correction vector V is a physical quantity having the same concept as the deviation amount (correction vector K) of the first embodiment.

The control unit 13 outputs the operation correction command to the robot driving unit 21, and the robot driving unit 21 corrects the target position of the welding torch 15 from the target position $T_1$ to the target position $T_0$ by the correction vector V according to the input operation correction command. Accordingly, the welding torch 15 can arrange the welding torch 15 at a correct target position according to the obtained correction vector V, and can perform accurate additive modeling.

According to the present embodiment, it is possible to accurately correct the target position while coping with the unintended error factor such as an arrangement error and tilting of the base metal, and dripping of the weld bead. In addition, the feature points represent information on the reference profile $P_{AS}$ and the actual profile $P_{AR}$, and it is expected to improve the robustness in the deviation correction.

The above is a case in which the base metal A before a weld bead is formed is set as the positioning index body when a weld bead of an initial layer is formed, and after the initial layer is formed, the formed weld bead can be set as the positioning index body.

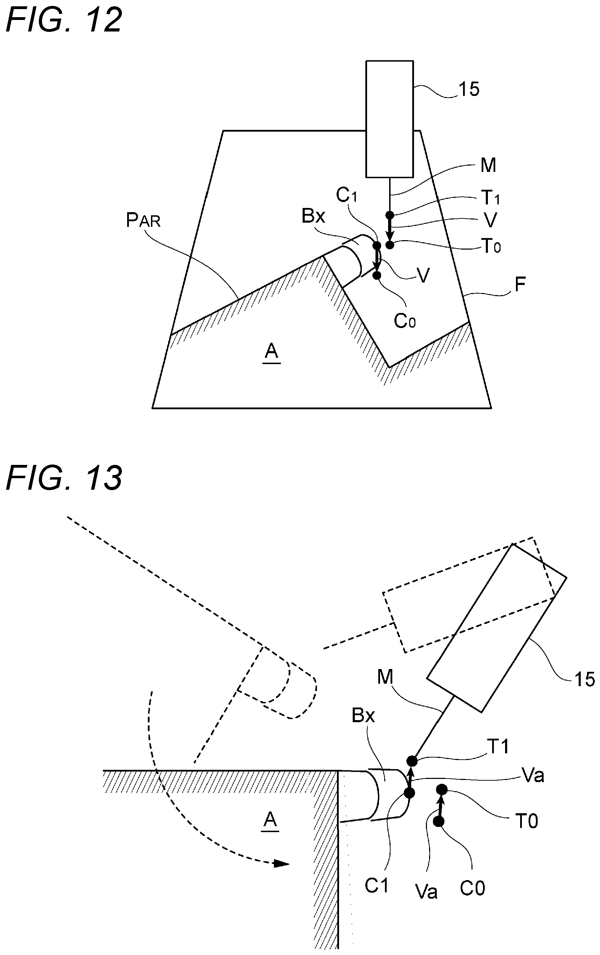

FIG. 12 is a diagram illustrating a relation between the welding torch 15, and the base metal A and the weld bead Bx during lamination in the sensor measurement visual field F.

Here, the weld bead $B_X$ formed on the base metal A is set as the positioning index body, and the vertex $C_1$ of the weld bead Bx is set as the feature point. The welding torch 15 is disposed such that the target position is $T_1$ by driving the welding robot 17, and an actual position of the welding torch 15 deviates from the correct target position $T_0$.

As in the case of using the feature point on the base metal A at the time of forming the initial layer, the deviation amount calculation unit 39 of the control unit 13 obtains the correction vector V representing the direction and the length from the vertex $C_1$ of the weld bead $B_X$ in the actual profile $P_{AR}$ to the vertex $C_0$ of the weld bead $B_X$ in the reference profile $P_{AS}$ (not illustrated). Then, the output unit 41 outputs the operation correction command for correcting the target position of the welding torch 15 according to the correction vector V. Accordingly, the position of the welding torch 15 can be corrected to the correct target position $T_0$.

Next, an example in which the tip position of the filler metal M to be the target position and the set feature point are associated with each other to correct the position of the welding torch 15 to the correct target position will be described.

FIG. 13 is a diagram illustrating the state in which the target position of the welding torch 15 is corrected based on a relation between the vertex of the weld bead and the tip position of the filler metal M.

As illustrated in FIG. 13, after the welding torch 15 is rotated, the target position $T_1$ of the welding torch 15 deviates from the correct target position $T_0$. Therefore, the control unit 13 obtains the vertex $C_1$ of the weld bead Bx, which is the feature point, based on the actual profile measured by the shape measurement unit 33, and obtains a positional relation between the target position $T_1$ and the vertex $C_1$. Specifically, a correction vector Va from the vertex $C_1$ toward the target position $T_1$ is obtained. Then. the vertex $C_0$ of the weld bead Bx is obtained based on the reference profile prepared in advance, and a position moved from the vertex $C_0$ by the correction vector Va is set as the correct target position $T_0$.

Even with such a method, the target position of the welding torch 15 can be accurately corrected to the correct target position $T_0$. The above-described feature point may be the corner of the base metal A or the vertex of the weld bead Bx, or may be any point on a cross section orthogonal to a longitudinal direction of the base metal A or the weld bead Bx. In addition, the feature point may be a shape feature point of a geometric model obtained by approximating all or a part of the actual profile to the model.

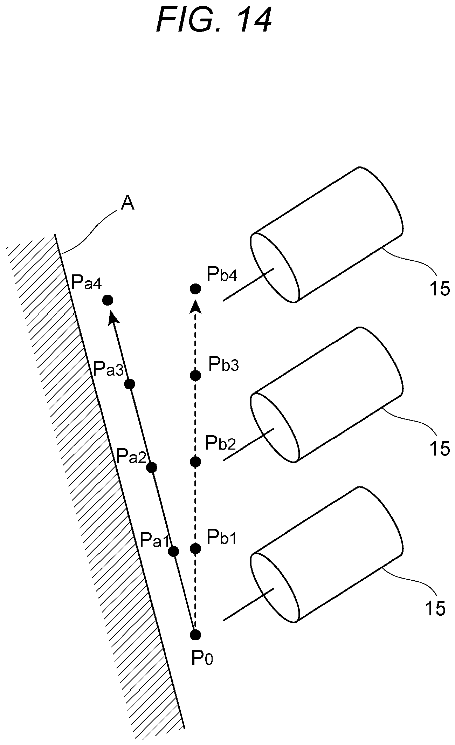

FIG. 14 is a diagram schematically illustrating a difference in bead formation paths depending on whether the target position of the welding torch is corrected.

It is considered that when the welding torch 15 is moved in an order of $P_{b1}$, $P_{b2}$, $P_{b3}$, and $P_{b4}$ from a target position $P_0$ according to a trajectory plan, the base metal A is tilted from a movement direction of the welding torch 15. At this time, when the target position of the welding torch is moved according to the trajectory plan without being corrected, the formation position of the weld bead is gradually separated from the base metal A, and the bead cannot be appropriately formed.

When the welding torch 15 is moved to the target position $P_{b1}$, the target position is corrected by using the above-described method. Accordingly, the weld bead is stably formed at an appropriate position along the base metal A. That is, when the welding torch 15 is moved to the target position $P_{b1}$, the target position $P_{b1}$ is corrected to a position $P_{a1}$. Similarly, the position $P_{b2}$ is also repeatedly corrected to a position $P_{a2}$, and the welding torch 15 is moved in an order of $P_{a1}$, $P_{a2}$, $P_{a3}$, and $P_{a4}$ from the position $P_0$.

As described above, by sequentially correcting the target position of the welding torch 15, the weld bead B can be formed at a correct position by aligning the bead formation path with the accurate target positions. Accordingly, the modeling object can be modeled with a high accuracy.

In each of the above-described embodiments, the target position of the welding torch 15 may be corrected only when the weld bead B is formed at a position at which the weld bead B overhangs with respect to the base metal A or the existing weld bead B that is a foundation. In this case, it is not necessary to perform a correction processing for the target position on all the regions, and it is possible to prevent a decrease in productivity. In addition, by correcting the target position only in an overhang portion and the like at which an accuracy of the target position is particularly required, it is possible to achieve a good balance between ensuring a shape accuracy and the productivity.

[Examples]

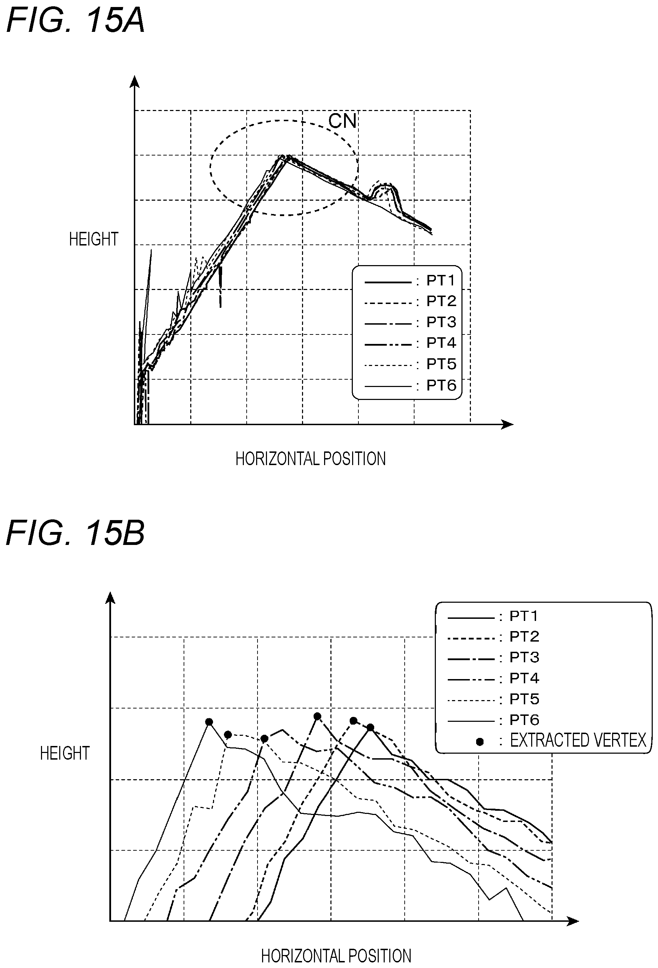

FIGS. 15A and 15B are graphs of reference examples illustrating a result of moving the welding torch without correcting the target position and detecting a height distribution of a corner, which is a feature point of the base metal, by the shape measurement unit.

FIG. 15A illustrates the height distribution of a region including a total of six corners (positions $P_{t1}$, $P_{t2}$, $P_{t3}$, $P_{t4}$, $P_{t5}$, and $P_{t6}$) along the movement direction of the welding torch. FIG. 15B illustrates an enlarged height distribution of a region CN near the corners in FIG. 15A.

When the target position is not corrected, the position of the corner of the base metal varies as illustrated in FIG. 15B, and a distance between the target position and the corner of the base metal varies with the movement of the welding torch.

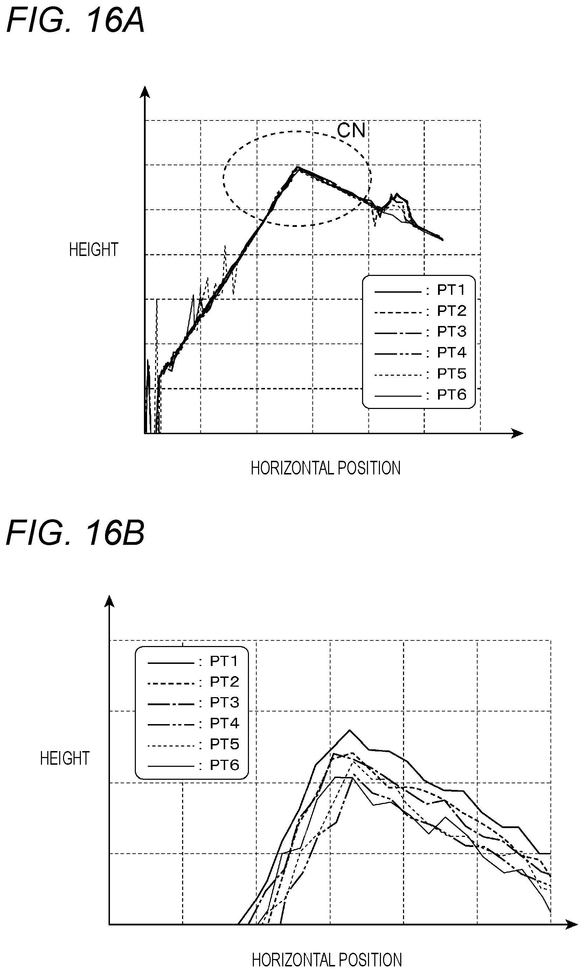

FIGS. 16A and 16B are graphs illustrating a result of moving the welding torch while correcting the target position and detecting a height distribution of the corner, which is the feature point of the base metal, by the shape measurement unit.

FIGS. 16A and 16B illustrate the height distributions of a total of six corners along the movement direction of the welding torch as in FIGS. 15A and 15B. When FIG. 16B is compared with FIG. 15B, the result of FIG. 16B in which the target position is corrected shows that the corner moves less. That is, it is understood that by correcting the target position, the welding torch moves parallel to the corner of the base metal.

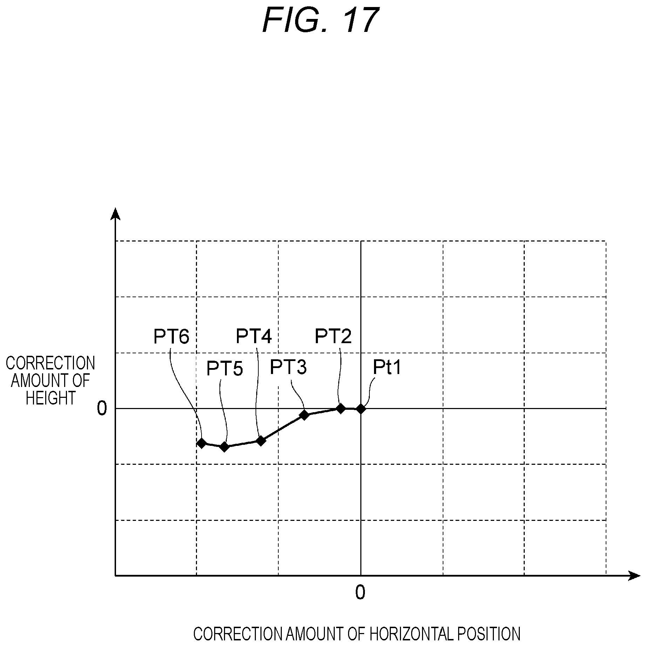

FIG. 17 is a graph illustrating changes in correction amounts of horizontal positions and heights at the positions $P_{t1}$ to $P_{t6}$ illustrated in FIGS. 16A and 16B.

It can be understood that the correction amount increases as the welding torch moves from the position $P_{t1}$, and particularly in a horizontal direction, the correction amount changes in proportion to a movement distance, and the corner of the base metal and the movement direction of the welding torch are tilted.

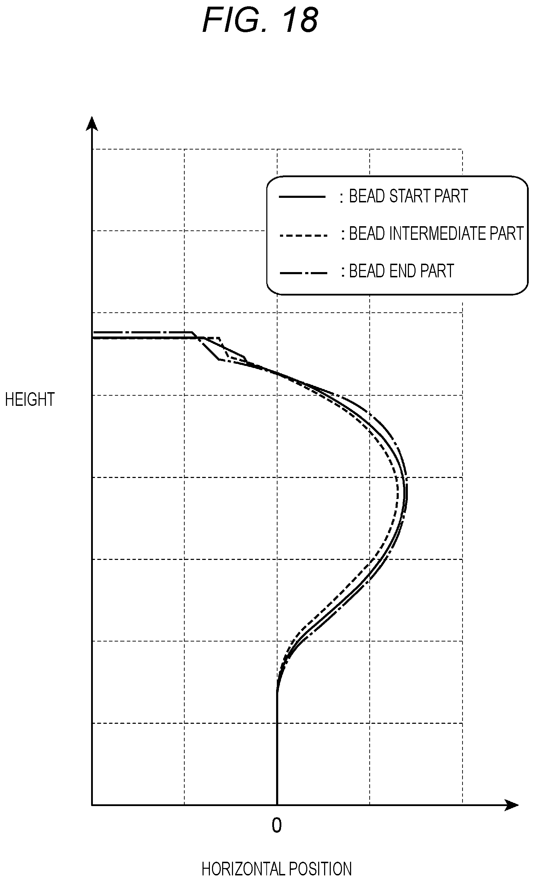

FIG. 18 is a graph illustrating a result of measuring a cross-sectional shape orthogonal to a bead longitudinal direction at each of a bead start part position, a bead intermediate part position, and a bead end part position in a case in which the weld bead is formed along the corner of the base metal while correcting the target position.

By correcting the target position of the welding torch, the cross-sectional shape of the formed weld bead is substantially constant at the bead start part position, the bead intermediate part position, and the bead end part position. That is, the bead can be appropriately formed regardless of a bead position, and a modeling object can be obtained with a high formation accuracy.

REF ERENCE SIGNS LIST

11 modeling unit
13 control unit
15 welding torch
17 welding robot (manipulator)
21 robot driving unit
23 filler metal supply unit
25 welding power supply unit
27 base plate (base metal)
29 reel
30 modeling object
33 shape measurement unit
35 reference profile acquisition unit
37 actual profile acquisition unit
39 deviation amount calculation unit
41 output unit
45 columnar portion
47 protruding portion
100 additive modeling device (modeling device)
A base metal
B, BX weld bead
$C_0$, $C_1$, $C_3$ vertex (feature point)
$C_2$ central point (feature point)
F sensor measurement visual field
LB laser beam
M filler metal (welding wire)

**Claims**

1. A method for controlling a modeling device (100) that corrects a target position of a welding torch (15) in the modeling device (100) for repeatedly forming weld beads (B) on a base metal (27) by melting and solidifying a filler metal (M) supplied to the welding torch (15) using a manipulator (17) holding the welding torch (15), the method being **characterised by** the following steps:

   a step of acquiring a reference profile prepared in advance and including a shape of a positioning index body implemented by at least a part of the base metal (27) or the weld bead (B);
   a step of measuring a shape of the positioning index body by a shape measurement unit (33) attached to the welding torch (15) or the manipulator (17) to acquire an actual profile;
   a step of comparing the reference profile with the actual profile of the positioning index body to obtain a deviation amount of the target position of the welding torch (15) based on a positional deviation of the positioning index body between the reference profile and the actual profile; and
   a step of outputting an operation correction command of the manipulator (17) for correcting the target position of the welding torch (15) according to the deviation amount,
   wherein
   the reference profile is information including position information of a feature point of the positioning index body measured by the shape measurement unit (33) before the manipulator (17) is driven, and
   the actual profile is information including position information of a feature point of the positioning index body measured by the shape measurement unit (33) after the manipulator (17) is driven to rotationally move the welding torch (15).

2. The method for controlling a modeling device (100) according to claim 1, wherein
the feature point is a shape feature point of a geometric model obtained by approximating all or a part of the actual profile measured by the shape measurement unit (33) to the model.

3. The method for controlling a modeling device (100) according to claim 1 or 2, wherein
the deviation amount of the target position of the welding torch (15) is obtained based on an average amount of positional deviations of a plurality of types of the feature points in the reference profile and the actual profile.

4. The method for controlling a modeling device (100) according to any one of claims 1 to 3, wherein
the feature point includes any one of a plurality of valley portions formed between the weld beads (B) arranged in a plurality of rows.

5. The method for controlling a modeling device (100) according to any one of claims 1 to 3, wherein
the feature point is a vertex of a corner of the base metal (27).

6. The method for controlling a modeling device (100) according to any one of claims 1 to 3, wherein
the feature point is a vertex on a cross section orthogonal to a longitudinal direction of the weld bead (B).

7. The method for controlling a modeling device (100) according to any one of the preceding claims, further comprising:
correcting the target position of the welding torch (15) only when the weld bead (B) is formed at a position at which the weld bead (B) overhangs with respect to the base metal (27) or the existing weld bead (B) serving as a foundation.

8. A modeling device (100) for repeatedly forming weld beads (B) on a base metal (27) by melting and solidifying a filler metal (M) supplied to a welding torch (15) using a manipulator (17) holding the welding torch (15), the modeling device (100) comprising:

   a modeling unit (11); and
   a control unit (13) configured to correct a target position of the welding torch (15) by using a positioning index body implemented by at least a part of the base metal (27) or the weld bead (B), wherein
   the modeling unit (11) includes the welding robot (17) having the welding torch (15) on a tip shaft thereof, a robot driving unit (21) that is configured to drive the welding robot (17), the filler metal supply unit (23) that is configured to supply the filler metal (M) to the welding torch (15), a welding power supply unit (25) that is configured to supply a welding current and a welding voltage, and a shape measurement unit (33) that is configured to measure a shape, **characterised in that** the control unit (13) includes

      a reference profile acquisition unit (35) configured to acquire a reference profile prepared in advance and including a shape of the positioning index body;
      an actual profile acquisition unit (37) configured to measure a shape of the positioning index body by the shape measurement unit (33) attached to the welding torch (15) or the manipulator (17) to acquire an actual profile;
      a deviation amount calculation unit (39) configured to compare the reference profile with the actual profile of the positioning index body to obtain a deviation amount of the target position of the welding torch (15) based on a positional deviation of the positioning index body between the reference profile and the actual profile; and
      an output unit (41) configured to output an operation correction command of the manipulator (17) for correcting the target position of the welding torch (15) according to the deviation amount,

      the reference profile is information including position information of a feature point of the positioning index body measured by the shape measurement unit (33) before the manipulator (17) is driven, and
      the actual profile is information including position information of a feature point of the positioning index body measured by the shape measurement unit (33) after the manipulator (17) is driven to rotationally move the welding torch (15).

**Patentansprüche**

1. Ein Verfahren zum Steuern einer Modelliervorrichtung (100), die eine Zielposition eines Schweißbrenners (15) in der Modelliervorrichtung (100) korrigiert, um wiederholt Schweißraupen (B) auf einem Grundmetall (27) zu bilden, indem ein dem Schweißbrenner (15) zugeführtes Zusatzmetall (M) geschmolzen und erstarrt wird, unter Verwendung eines Manipulators (17), der den Schweißbrenner (15) hält, wobei das Verfahren durch die folgenden Schritte gekennzeichnet ist:

   ein Schritt des Erfassens eines im Voraus erstellten Referenzprofils, das eine Form eines Positionierungsindexkörpers beinhaltet, der durch mindestens einen Teil des Grundmetalls (27) oder der Schweißraupe (B) realisiert ist,
   ein Schritt des Messens einer Form des Positionierungsindexkörpers mittels einer an dem Schweißbrenner (15) oder dem Manipulator (17) angebrachten Formmessungseinheit (33), um ein Ist-Profil zu erfassen;
   ein Schritt des Vergleichens des Referenzprofils mit dem Ist-Profil des Positionierungsindexkörpers, um einen Abweichungsbetrag der Zielposition des Schweißbrenners (15) auf der Grundlage einer Positionsabweichung des Positionierungsindexkörpers zwischen dem Referenzprofil und dem Ist-Profil zu erhalten; und
   einen Schritt des Ausgebens eines Betriebskorrekturbefehls an den Manipulator (17) zum Korrigieren der Zielposition des Schweißbrenners (15) entsprechend dem Abweichungsbetrag,
   wobei
   das Referenzprofil aus Informationen besteht, die Positionsinformationen eines Merkmalspunkts des Positionierungsindexkörpers beinhalten, die von der Formmessungseinheit (33) gemessen wurden, bevor der Manipulator (17) angetrieben wurde, und wobei
   das Ist-Profil aus Informationen besteht, die Positionsinformationen eines Merkmalspunkts des Positionierungsindexkörpers beinhalten, die von der Formmessungseinheit (33) gemessen wurden, nachdem der Manipulator (17) angetrieben wurde, um den Schweißbrenner (15) rotierend zu bewegen.

2. Das Verfahren zum Steuern einer Modellierungsvorrichtung (100) nach Anspruch 1, wobei
   der Merkmalspunkt ein Form-Merkmalspunkt eines geometrischen Modells ist, das durch Annäherung des gesamten oder eines Teils des von der Formmessungseinheit (33) gemessenen Ist-Profils an das Modell erhalten wird.

3. Das Verfahren zum Steuern einer Modelliervorrichtung (100) nach Anspruch 1 oder 2, wobei
   der Abweichungsbetrag der Zielposition des Schweißbrenners (15) auf der Grundlage eines Durchschnittsbetrags der Positionsabweichungen einer Vielzahl von Arten der Merkmalspunkte im Referenzprofil und im Ist-Profil erhalten wird.

4. Das Verfahren zum Steuern einer Modellierungsvorrichtung (100) nach irgendeinem der Ansprüche von 1 bis 3, wobei
   der Merkmalspunkt einen beliebigen einer Vielzahl von Talabschnitten beinhaltet, die zwischen den in einer Vielzahl von Reihen angeordneten Schweißraupen (B) gebildet sind.

5. Das Verfahren zum Steuern einer Modelliervorrichtung (100) nach irgendeinem der Ansprüche von 1 bis 3, wobei der Merkmalspunkt ein Scheitelpunkt (*vertex*) einer Ecke des Grundmetalls (27) ist.

6. Das Verfahren zum Steuern einer Modelliervorrichtung (100) nach irgendeinem der Ansprüche von 1 bis 3, wobei der Merkmalspunkt ein Scheitelpunkt in einem Querschnitt ist, der senkrecht zu einer Längsrichtung der Schweißraupe (B) liegt.

7. Das Verfahren zum Steuern einer Modelliervorrichtung (100) nach irgendeinem der vorstehenden Ansprüche, das ferner Folgendes umfasst:
   Korrigieren der Zielposition des Schweißbrenners (15) nur dann, wenn die Schweißraupe (B) an einer Position gebildet wird, an der die Schweißraupe (B) in Bezug auf das Grundmetall (27) oder die vorhandene Schweißraupe (B), die als Fundament dient, überhängt.

8. Eine Modelliervorrichtung (100), um wiederholt Schweißraupen (B) auf einem Grundmetall (27) zu bilden, indem ein dem Schweißbrenner (15) zugeführtes Zusatzmetall (M) geschmolzen und erstarrt wird, unter Verwendung eines Manipulators (17), der den Schweißbrenner (15) hält, wobei die Modelliervorrichtung (100) Folgendes umfasst:

   eine Modellierungseinheit (11); und

eine Steuereinheit (13), die konfiguriert ist, um eine Zielposition des Schweißbrenners (15) unter Verwendung eines Positionierungsindexkörpers zu korrigieren, der durch mindestens einen Teil des Grundmetalls (27) oder der Schweißnaht (B) realisiert ist, wobei

die Modellierungseinheit (11) Folgendes beinhaltet: den Schweißroboter (17) mit dem Schweißbrenner (15) an dessen Spitzenwelle, eine Roboterantriebseinheit (21), die konfiguriert ist, um den Schweißroboter (17) anzutreiben, die Zusatzmetall-Zufuhreinheit (23), die konfiguriert ist, um dem Schweißbrenner (15) das Zusatzmetall (M) zuzuführen, eine Schweißstromversorgungseinheit (25), die konfiguriert ist, um einen Schweißstrom und eine Schweißspannung zu liefern, und eine Formmessungseinheit (33), die zum Messen einer Form konfiguriert ist,

**dadurch gekennzeichnet, dass** die Steuereinheit (13) Folgendes beinhaltet:

eine Referenzprofil-Erfassungseinheit (35), die dazu konfiguriert ist, ein im Voraus erstelltes Referenzprofil zu erfassen, das eine Form des Positionierungsindexkörpers beinhaltet;

eine Ist-Profil-Erfassungseinheit (37), die dazu konfiguriert ist, eine Form des Positionierungsindexkörpers durch die Formmessungseinheit (33) zu messen, die am Schweißbrenner (15) oder am Manipulator (17) angebracht ist, um ein Ist-Profil zu erfassen;

eine Abweichungsbetrags-Berechnungseinheit (39), die dazu konfiguriert ist, das Referenzprofil mit dem Ist-Profil des Positionierungsindexkörpers zu vergleichen, um einen Abweichungsbetrag der Zielposition des Schweißbrenners (15) auf der Grundlage einer Positionsabweichung des Positionierungsindexkörpers zwischen dem Referenzprofil und dem Ist-Profil zu erhalten; und

eine Ausgabeeinheit (41), die dazu konfiguriert ist, einen Betriebskorrekturbefehl des Manipulators (17) auszugeben, um die Zielposition des Schweißbrenners (15) entsprechend dem Abweichungsbetrag zu korrigieren,

das Referenzprofil aus Informationen besteht, die Positionsinformationen eines Merkmalspunkts des Positionierungsindexkörpers beinhalten, die von der Formmessungseinheit (33) gemessen wurden, bevor der Manipulator (17) angetrieben wurde, und

das Ist-Profil aus Informationen besteht, die Positionsinformationen eines Merkmalspunkts des Positionierungsindexkörpers beinhalten, die von der Formmessungseinheit (33) gemessen wurden, nachdem der Manipulator (17) angetrieben wurde, um den Schweißbrenner (15) rotierend zu bewegen.

## Revendications

1. Un procédé de commande d'un dispositif de modelage (100) qui corrige la position cible d'une torche de soudage (15) dans le dispositif de modelage (100) afin de former de manière répétée des cordons de soudure (B) sur un métal de base (27), en faisant fondre et en solidifiant un métal d'apport (M) fourni à la torche de soudage (15), à l'aide d'un manipulateur (17) tenant la torche de soudage (15), le procédé étant **caractérisé par** les étapes suivantes :

   une étape consistant à acquérir un profil de référence préparé à l'avance et incluant une forme d'un corps d'index de positionnement mis en œuvre par au moins une partie du métal de base (27) ou du cordon de soudure (B), une étape consistant à mesurer une forme du corps d'index de positionnement à l'aide d'une unité de mesure de forme (33) fixée à la torche de soudage (15) ou au manipulateur (17) afin d'acquérir un profil d'état réel (*actual profile*);

   une étape consistant à comparer le profil de référence avec le profil d'état réel du corps d'index de positionnement afin d'obtenir une valeur d'écart (*deviation amount*) de la position cible de la torche de soudage (15) sur la base d'un écart de position du corps d'index de positionnement entre le profil de référence et le profil d'état réel ; et une étape consistant à émettre une commande de correction de fonctionnement pour (*of*) le manipulateur (17) pour corriger la position cible de la torche de soudage (15) en fonction de la valeur d'écart, sachant que

   le profil de référence est une information incluant des informations de position d'un point caractéristique du corps d'index de positionnement mesurées par l'unité de mesure de forme (33) avant que le manipulateur (17) ne soit entraîné, et que

   le profil d'état réel est une information incluant des informations de position d'un point caractéristique du corps d'index de positionnement mesurées par l'unité de mesure de forme (33) après que le manipulateur (17) a été actionné pour déplacer en rotation la torche de soudage (15).

2. Le procédé de commande d'un dispositif de modelage (100) d'après la revendication 1, sachant que

EP 4 360 793 B1

le point caractéristique est un point caractéristique de forme d'un modèle géométrique obtenu en approximant tout ou partie du profil d'état réel mesuré par l'unité de mesure de forme (33) au modèle.

3. Le procédé de commande d'un dispositif de modelage (100) d'après la revendication 1 ou 2, sachant que la valeur d'écart de la position cible de la torche de soudage (15) est obtenue sur la base d'une valeur moyenne des écarts de position d'une pluralité de types de points caractéristiques dans le profil de référence et le profil d'état réel.

4. Le procédé de commande d'un dispositif de modelage (100) d'après l'une quelconque des revendications de 1 à 3, sachant que le point caractéristique inclut l'une quelconque d'une pluralité de portions en creux formées entre les cordons de soudure (B) disposés en une pluralité de rangées.

5. Le procédé de commande d'un dispositif de modelage (100) d'après l'une quelconque des revendications de 1 à 3, sachant que le point caractéristique est un sommet d'un coin du métal de base (27).

6. Le procédé de commande d'un dispositif de modelage (100) d'après l'une quelconque des revendications de 1 à 3, sachant que le point caractéristique est un sommet sur une section transversale orthogonale à une direction longitudinale du cordon de soudure (B).

7. Le procédé de commande d'un dispositif de modelage (100) d'après l'une quelconque des revendications précédentes, comprenant en outre le fait de :
corriger la position cible de la torche de soudage (15) uniquement lorsque le cordon de soudure (B) est formé à une position à laquelle le cordon de soudure (B) dépasse ou encore déborde (*overhangs*) par rapport au métal de base (27) ou au cordon de soudure existant (B) servant de fondation.

8. Un dispositif de modelage (100) destiné à former de manière répétée des cordons de soudure (B) sur un métal de base (27), en faisant fondre et en solidifiant un métal d'apport (M) fourni à une torche de soudage (15), à l'aide d'un manipulateur (17) tenant la torche de soudage (15), le dispositif de modelage (100) comprenant :

une unité de modelage (11) ; et
une unité de commande (13) configurée pour corriger une position cible de la torche de soudage (15) à l'aide d'un corps d'index de positionnement mis en œuvre par au moins une partie du métal de base (27) ou du cordon de soudure (B), sachant que
l'unité de modelage (11) inclut le robot de soudage (17) présentant la torche de soudage (15) sur un arbre d'extrémité de celui-ci, une unité d'entraînement de robot (21) qui est configurée pour entraîner le robot de soudage (17), l'unité d'alimentation en métal d'apport (23) qui est configurée pour fournir le métal d'apport (M) à la torche de soudage (15), une unité d'alimentation électrique de soudage (25) configurée pour fournir un courant de soudage et une tension de soudage, et une unité de mesure de forme (33) configurée pour mesurer une forme, **caractérisé en ce que** l'unité de commande (13) inclut :

une unité d'acquisition de profil de référence (35) configurée pour acquérir un profil de référence préparé à l'avance et incluant une forme du corps d'index de positionnement ;
une unité d'acquisition de profil d'état réel (37) configurée pour mesurer une forme du corps d'index de positionnement par l'unité de mesure de forme (33) fixée à la torche de soudage (15) ou au manipulateur (17) pour acquérir un profil d'état réel ;
une unité de calcul de valeur d'écart (39) configurée pour comparer le profil de référence avec le profil d'état réel du corps d'index de positionnement afin d'obtenir une valeur d'écart de la position cible de la torche de soudage (15) sur la base d'un écart de position du corps d'index de positionnement entre le profil de référence et le profil d'état réel ; et
une unité de sortie (41) configurée pour émettre une commande de correction de fonctionnement pour (*of*) le manipulateur (17) afin de corriger la position cible de la torche de soudage (15) en fonction de la valeur d'écart,

le profil de référence est une information incluant des informations de position d'un point caractéristique du corps d'index de positionnement mesurées par l'unité de mesure de forme (33) avant que le manipulateur (17) ne soit entraîné, et

16

le profil d'état réel est une information incluant des informations de position d'un point caractéristique du corps d'index de positionnement mesurées par l'unité de mesure de forme (33) après que le manipulateur (17) a été entraîné pour déplacer en rotation la torche de soudage (15).

FIG. 1

*FIG. 2*

13

CONTROL UNIT

| REFERENCE PROFILE ACQUISITION UNIT | 35 |

| ACTUAL PROFILE ACQUISITION UNIT | 37 |

| DEVIATION AMOUNT CALCULATION UNIT | 39 |

| OUTPUT UNIT | 41 |

# FIG. 3

# FIG. 4

# FIG. 5

```
                    ┌─────────────────────┐
                    │        START        │
                    └─────────────────────┘
                               │
                               ▼
    ┌───────────────────────────────────────────────────────┐
    │   ACQUIRE REFERENCE PROFILE INCLUDING SHAPE OF         │     S1
    │          POSITIONING INDEX BODY                        │
    └───────────────────────────────────────────────────────┘
                               │
                               ▼
    ┌───────────────────────────────────────────────────────┐
    │ MEASURE SHAPE OF POSITIONING INDEX BODY TO ACQUIRE     │     S2
    │              ACTUAL PROFILE                            │
    └───────────────────────────────────────────────────────┘
                               │
                               ▼
    ┌───────────────────────────────────────────────────────┐
    │ COMPARE REFERENCE PROFILE AND ACTUAL PROFILE TO OBTAIN │
    │ DEVIATION AMOUNT OF TARGET POSITION OF WELDING TORCH   │     S3
    │ BASED ON POSITIONAL DEVIATION OF POSITIONING INDEX BODY│
    │    BETWEEN REFERENCE PROFILE AND ACTUAL PROFILE        │
    └───────────────────────────────────────────────────────┘
                               │
                               ▼
    ┌───────────────────────────────────────────────────────┐
    │  OUTPUT OPERATION CORRECTION COMMAND OF WELDING        │
    │  ROBOT FOR CORRECTING TARGET POSITION OF WELDING       │     S4
    │    TORCH ACCORDING TO DEVIATION AMOUNT                 │
    └───────────────────────────────────────────────────────┘
                               │
                               ▼
                    ┌─────────────────────┐
                    │         END         │
                    └─────────────────────┘
```

## FIG. 6A

## FIG. 6B

# FIG. 7

# FIG. 8

## FIG. 9A

## FIG. 9B

## FIG. 10A

## FIG. 10B

# FIG. 11

## FIG. 12

## FIG. 13

# FIG. 14

## FIG. 15A

## FIG. 15B

## FIG. 16A

HEIGHT

HORIZONTAL POSITION

## FIG. 16B

HEIGHT

HORIZONTAL POSITION

# FIG. 17

CORRECTION AMOUNT OF HORIZONTAL POSITION

## FIG. 18

HEIGHT

: BEAD START PART

----- : BEAD INTERMEDIATE PART

-·- : BEAD END PART

0

HORIZONTAL POSITION

*FIG. 19A*

*FIG. 19B*

## FIG. 20A

## FIG. 20B

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007275945 A
- JP 6797324 B
- JP H0724573 A